## Europäisches Patentamt

## European Patent Office

## Office européen des brevets

(19)

(11) Veröffentlichungsnummer: **0 152 524**
**B1**

(12) # EUROPÄISCHE PATENTSCHRIFT

(45) Veröffentlichungstag der Patentschrift:
08.04.87

(51) Int. Cl.⁴: **C 05 F 9/04**

(21) Anmeldenummer: **84110851.7**

(22) Anmeldetag: **12.09.84**

(54) Verfahren zur Kompostierung von organischen Abfällen.

(30) Priorität: **06.12.83 DE 3344005**

(43) Veröffentlichungstag der Anmeldung:
**28.08.85 Patentblatt 85/35**

(45) Bekanntmachung des Hinweises auf die Patenterteilung:
**08.04.87 Patentblatt 87/15**

(84) Benannte Vertragsstaaten:
**AT BE CH DE FR GB IT LI LU NL SE**

(56) Entgegenhaltungen:
**DE-A-1 917 239**
**FR-A-2 329 615**
**US-A-4 104 048**

**Die Akte enthält technische Angaben, die nach
dem Eingang der Anmeldung eingereicht wurden
und die nicht in dieser Patentschrift enthalten sind.**

(73) Patentinhaber: **Mähn, Philipp, Römerhof, D-6097
Trebur- Astheim (DE)**

(72) Erfinder: **Mähn, Philipp, Römerhof, D-6097 Trebur-
Astheim (DE)**

(74) Vertreter: **Katscher, Helmut, Dipl.- Ing.,
Bismarckstrasse 29, D-6100 Darmstadt (DE)**

LIBER, STOCKHOLM 1987

## Beschreibung

Die Erfindung betrifft ein Verfahren zur Kompostierung von organischen Abfällen, insbesondere Friedhofs- und Gartenabfällen, bei dem die Abfälle zerkleinert und zur Rotte in Kompostmieten aufgesetzt werden.

Die Kompostierung von pflanzlichen Abfällen, insbesondere Gartenabfällen, ist seit langem bekannt. Die zerkleinerten Abfälle werden mit oder ohne Zugabe von kompost-Zuschlagstoffen in Kompostmieten aufgesetzt und einem Verrottungsprozeß überlassen, bei dem die Abfälle durch Kleinlebewesen zersetzt werden.

Der Verrottungsprozeß wird entscheidend dadurch beeinflußt, welche Lebensbedingungen diese Kleinlebewesen auf den Abfällen vorfinden. Man hat im wesentlichen darauf geachtet, den Zerkleinerungsgrad und die Durchmischung der Abfälle so zu wählen, daß eine für die Entwickung der Kleinlebewesen günstige Lebensbedingung geschaffen wurde. Weitere Maßnahmen zur Beeinflussung des Verrottungsprozesses bestanden darin, für die Entwicklung der Kleinstlebewesen günstige Zuschlagstoffe zuzugeben und/oder die Kompostmiete einmal oder mehrfach umzusetzen.

Mit diesen bisher zur Verfügung stehenden Maßnahmen ließ sich jedoch eine wirksame Kompostierung von in großen Mengen und teilweise einseitiger Zusammensetzung anfallenden pflanzlichen Abfällen, insbesondere Friedhofsabfällen, nicht in zufriedenstellender Weise erreichen. Deshalb werden beispielsweise Friedhofsabfälle in den meisten Fällen nicht kompostiert, sondern in Müllverbrennungsanlagen beseitigt. Dadurch werden erhebliche Kosten verursacht; außerdem wird damit auf die Gewinnung großer Mengen von wertvollem Kompost verzichtet.

Aufgabe der Erfindung ist es daher, ein Verfahren der eingangs genannten Gattung zu schaffen, des eine wesentliche Verbesserung des Kompostierungsvorgangs ermöglicht, so daß auch in großer Menge anfallende organische Abfälle, insbesondere Friedhofs- und Gartenabfälle von Kommunen, mit geringem Arbeitsaufwand zu hochwertigem Kompost verarbeitet werden können.

Diese Aufgabe wird erfindungsgemäß dadurch gelöst, daß die Abfälle vor dem Aufsetzen in Kompostmieten in mehreren Lagen zu einer flachen Matratze auf den Erdboden geschichtet werden, daß die Zerkleinerung der Abfälle in jeder einzelnen Matratzenlage durch einen Mulchvorgang mit im wesentlichen schlagender und quetschender Bearbeitung der Abfälle erfolgt, daß die Matratze mit Fahrzeugen befahren wird, und daß die Abfälle etwa 2 bis 3 Monate in der Matratze verbleiben.

Durch diese Vorbehandlung werden in den überwiegend pflanzlichen Abfällen ausgezeichnete Lebensbedingungen für die die Verrottung bewirkenden Kleinstlebewesen geschaffen.

Es wurde vor allem erkannt, daß es hierbei nicht nur auf den Zerkleinerungsgrad, sondern in erster Linie auch auf die erzielte Oberflächenbeschaffenheit der Abfallteilchen ankommt. Im Gegensatz zu einer überwiegend schneidenden Zerkleinerung, bei der die Fasern zwischen den Schnittstellen unzerstört bleiben und deshalb von den Kleinstlebewesen nur von den Schnittstellen her aufgeschlossen werden können, werden bei der überwiegend schlagenden und quetschenden Bearbeitung die Fasern über ihre ganze Länge für den Angriff der Kleinstlebewesen geöffnet; dies gilt ganz besonders für verholzte Pflanzenteile, deren Zellen größtenteils zerstört werden.

Als besonders wichtig wurde die Beeinflussung des Feuchtigkeitsgehalts der Abfälle vor Beginn des Verrottungsprozesses erkannt. Obwohl bekannt war, daß die die Verrottung bewirkenden Kleinstlebewesen, insbesondere Bakterien, für ein optimales Wachstum einen bestimmten Feuchtigkeitsgehalt benötigen, war bisher nicht erkannt worden, in welcher Form diese Feuchtigkeit zugeführt werden muß. Durch Berieseln oder künstliche oder natürliche Beregnung kann zwar der Feuchtigkeitsgehalt der Abfälle insgesamt erhöht werden. Diese Feuchtigkeit hängt aber zum größten Teil nur an der Oberfläche der einzelnen Teilchen und dringt nur sehr langsam in die Teilchen ein. Beim erfindungsgemäßen Verfahren kann auf diese weitgehend unwirksame Art der Feuchtigkeitszufuhr verzichtet werden. Da die die Matratze bildenden Abfälle unmittelbar auf dem Erdboden liegen und beim Befahren angedrückt werden, besteht eine enge Verbindung der Kapillargefäße des Erdbodens und der Abfälle. Die Feuchtigkeit steigt aus dem Erdboden in die Matratze auf; dadurch wird der Feuchtigkeitsgehalt der Abfälle auf einen für die Entwicklung der Kleinstlebewesen günstigen Wert gebracht, wobei die Feuchtigkeit im Inneren der einzelnen Teilchen der Matratze ansteigt. Im Gegensatz dazu bringt eine Berieselung nur eine Erhöhung der an der Außenseite der Teilchen anhaftenden Feuchtigkeitsmenge, ohne jedoch deren inneren Feuchtigkeitsgehalt wesentlich zu steigern.

Durch die Kapillarwirkung ist ein ständig aufsteigender Feuchtigkeitsstrom im Erdreich sichergestellt. Dadurch wird verhindert, daß an der Außenseite der Abfallteilchen möglicherweise anhaftende Schadstoffe, beispielsweise Pflanzenschutzmittel, in das Erdreich eindringen. Das erfindungsgemäße Verfahren kann somit auch dann für unbegrenzte Zeit betrieben werden, wenn regelmäßig größere Mengen von mit Schadstoffen behafteten Abfällen behandelt werden, ohne daß es zu einer Ansammlung von Schadstoffen im Erdreich und einer möglichen Verunreinigung des Grundwassers kommt.

Während der zwei- bis dreimonatigen Verweildauer der Abfälle in der Matratze bilden sich auf den Abbau organischer Substanz spezialisierte Lebensgemeinschaften (Biozönosen), die einen Teilabbau dieser organischen Substanz einleiten und sich entsprechend vermehren. Dieser Vorgang wird als Vorfermentierung bezeichnet. Er schafft die Voraussetzung dafür, daß in den Kompostmieten, zu denen die Abfälle anschließend aufgeschichtet werden, der Verrottungsvorgang rasch beginnt und wirksam abläuft.

Die vorgesehene schlagende und quetschende Bearbeitung der Abfälle erfolgt in besonders einfacher Weise dadurch, daß der Mulchvorgang der jeweils obersten Matratzenlage durch mehrmaliges Überfahren der Matratze mit einem Mulchgerät mit an einer angetriebenen Welle angebrachten Schlaghämmern durchgeführt wird.

Je nach der Eindringtiefe des Mulchgeräts kann es angebracht sein, die jeweils obersten Matratzenlagen nach einem Mulchvorgang mittels einer Bodenfräse aufzulockern und danach einem weiteren Mulchvorgang zu unterwerfen. Die Bearbeitung mit der Bodenfräse bringt diejenigen Abfallteile an die Oberfläche, die bei dem vorangegangenen Mulchvorgang noch nicht ausreichend erfaßt wurden.

Weitere vorteilhafte Ausgestaltungen des Erfindungsgedankens sind Gegenstand weiterer Unteransprüche.

Die Erfindung wird nachfolgend an einem Ausführungsbeispiel anhand der Zeichnung näher erläutert. Es zeigt:

Fig. 1 eine stark vereinfachte Darstellung des Verfahrensablaufs und

Fig. 2 in einem vereinfachten senkrechten Schnitt die aus organischen Abfällen bestehende Matratze beim Mulchvorgang.

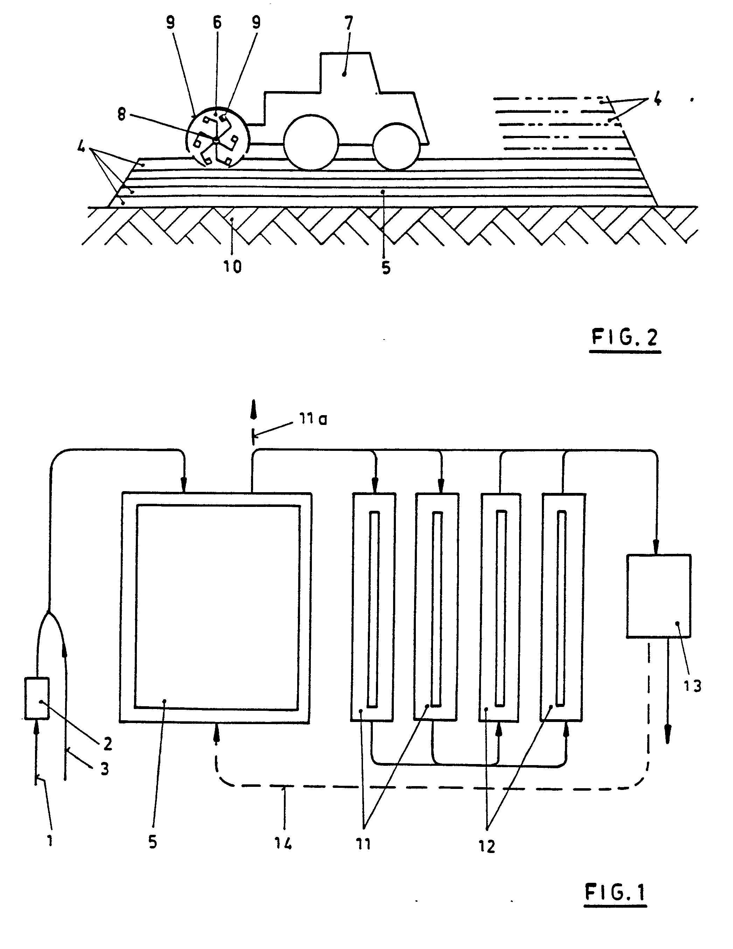

Die in Fig. 1 stark vereinfacht dargestellte Anlage dient überwiegend dazu, Friedhofsabfälle 1 zu kompostieren. Diese werden zunächst einer Vorsortierung 2 zugeführt, die zweckmäßigerweise noch auf dem Friedhof selbst erfolgen sollte. Hierbei werden Metallteile, Kunststoffteile und Papier aussortiert. Die Vorsortierung erfolgt von Hand.

Von Direktanlieferern werden pflanzliche Abfälle 3 angenommen, insbesondere Gartenabfälle, die auch dickeres Astwerk enthalten können. Je nach der Leistungsfähigkeit des verwendeten Zerkleinerungsgeräts können Astdurchmesser bis zu 10 bis 15 cm zugelassen werden.

Die angelieferten Abfälle werden jeweils in einzelnen Lagen 4 zu einer Matratze 5 geschichtet, deren Grundfläche beliebig gewählt werden kann und sich im allgemeinen nach der zu erwartenden Durchsatzmenge und der jeweiligen Verweildauer richtet. Die Matratze 5 weist eine Gesamthöhe von 0,5 bis 1,0 m auf und besteht aus etwa 5 bis 10 Matratzenlagen 4.

Die Zerkleinerung der angelieferten Abfälle erfolgt auf der Matratze 5 durch ein Mulchgerät 6, das als Anbaugerät eines Traktors 7 ausgeführt ist. Das Mulchgerät 6 weist eine horizontale angetriebene Welle 8 auf, die mit Schlaghämmern 9 bestückt ist. Die Schlaghämmer 9 bewirken eine überwiegend schlagende und quetschende Bearbeitung der Abfälle in der jeweils obersten Matratzenlage 4. Das Mulchgerät 6 ist in der Höhe verstellbar.

Die Zerkleinerung erfolgt beispielsweise durch zweimaliges Überfahren der Abfälle mit dem Mulchgerät 6, einem anschließenden Durcharbeiten des zerkleinerten Materials mit einer Bodenfräse und einem dritten Zerkleinerungsvorgang mit dem Mulchgerät 6. Der Einsatz der Bodenfräse nach dem zweiten Mulchvorgang ist insbesondere dann angezeigt, wenn das Mulchgerät 6 eine zu geringe Tiefenwirkung hat. Durch entsprechende Zuordnung der einzelnen Abfall-Anlieferungen kann erreicht werden, daß über dem Querschnitt der Matratze 5 möglichst unterschiedliche Materialien zu liegen kommen.

Im allgemeinen besteht die Matratze aus etwa 20 % Grobteilen und etwa 80 % Feinteilen. Bedarfsweise können Kompost-Zuschlagstoffe zugegeben werden, wie Mist, Stickstoff, Bentonit od. dgl.

Die unmittelbar auf dem Erdboden 10 liegende Matratze wird beim Anliefern, beim Mulchvorgang und beim Fräsvorgang mit Fahrzeugen befahren. Dadurch wird die Matratze in so intensive Berührung mit dem Erdboden 10 gebracht, daß die in den Kapillaren des Erdbodens aufsteigende Feuchtigkeit in den auch in der Matratze 5 vorhandenen Kapillaren weiter aufsteigt und das Material gleichmäßig mit Feuchtigkeit anreichert. Nach etwa zwei bis drei Monaten Verweildauer der Abfälle in den Matratze 5 hat sich eine für den nachfolgenden Verrottungsvorgang optimale Ausgangsfeuchte eingestellt. Dabei bilden sich für die Zersetzung des organischen Materials wichtige und spezialisierte Lebensgemeinschaften (Biozönosen), die sich bereits entsprechend vermehren und einen Teilabbau der organischen Substanz einleiten (Vorfermentierung).

Nach der angegebenen Verweildauer kann das Material bereits als Rohkompost abgezogen und abgegeben werden, wie in Fig. 1 mit einem gestrichelten Pfeil 11a angedeutet ist. Im allgemeinen wird der Rohkompost aber von der Matratze 5 mit einem Radlader aufgenommen und zur Vorrotte auf etwa 2 m hohe Trapezmieten 11 aufgesetzt. Während des Aufsetzvorganges oder auf die Mietenoberfläche kann Impfmaterial zugegeben werden. Dieses wird von anderen Mieten entnommen, die sich bereits in einem weiter fortgeschrittenen Rottestadium befinden und mit Kleinstlebewesen reichlich durchsetzt sind.

Nach wenigen Stunden oder Tagen entwickeln sich in den Mieten 11 hohe Temperaturen, die im Mietenkern 70 °C und mehr erreichen können. In den kälteren Randbereichen der Miete vermehren sich Nematoden, Spinnentiere, Tausendfüßler und ähnliche Kleinlebewesen, die beim langsamen Erkalten der Miete auch in die tiefer liegenden Bereiche eindringen.

Das rasche und intensive Einsetzen des Verrottungsvorgangs wurde durch das Aufreißen und Auffasern der Holzbestandteile durch den vorangegangenen schlagenden und quetschenden Bearbeitungsvorgang beim Mulchen ermöglicht. Dadurch wurden große Angriffsflächen für den biologischen Abbau der organischen Substanz geschaffen. Besondere Bedeutung kommt dabei auch der beschriebenen Feuchtigkeitsaufnahme in den Kapillaren des Abfallmaterials zu.

Nach etwa dreimonatiger Verweildauer in den Mieten 11 sinkt die Temperatur auf unter 40 °C ab. Aus den in großer Zahl abgelegten Wurmeier schlüpfen zu diesem Zeitpunkt die Würmer aus. Da der Mietenkern infolge der ungleichmäßigen Temperaturverteilung während der Vorrotte weitgehend ausgetrocknet ist, wird das Material der Mieten 11 zur Nachrotte auf Mieten 12 umgesetzt. Während der Nachrotte steigt die Temperatur erneut an, klingt jedoch rascher wieder ab. Die Nachrotte dauert insgesamt etwa zwei bis vier Monate.

Der Fertigkompost ist mit wenigen nichtzerkleinerten und auch nicht vollständig verrotteten Aststücken durchsetzt. In einer Siebeinrichtung 13 werden diese organischen Siebrückstände ausgeschieden und auf die Matratze 5 zurückgeführt, wie in Fig. 1 mit einer gestrichelten Linie 14 angedeutet ist.

Die zu verarbeitenden Abfälle können zum Teil auch aus Klärschlamm bestehen. Beispielsweise kann soviel Klärschlamm zugesetzt werden, daß das Matratzenvolumen bis zu etwa 25 % aus Klärschlamm besteht, während der Rest pflanzliche Abfälle sind. In der Matratze 5 wählt man beim Zusatz von Klärschlamm eine Zusammensetzung von etwa 30 % Grobteilen und etwa 70 % Feinteilen.

Zu den organischen Abfällen, die verarbeitet werden können, gehören beispielsweise auch trockenes Holz und andere Materialien, die organischen Ursprungs und biologisch abbaubar sind.

**Patentansprüche**

1. Verfahren zur Kompostierung von organischen Abfällen, insbesondere Friedhofs- und Gartenabfällen, bei dem die Abfälle zerkleinert und zur Rotte in Kompostmieten aufgesetzt werden, dadurch gekennzeichnet, daß die Abfälle vor dem Aufsetzen in Kompostmieten in mehreren Lagen zu einer flachen Matratze auf den Erdboden geschichtet werden, daß die Zerkleinerung der Abfälle in jeder einzelnen Matratzenlage durch einen Mulchvorgang mit im wesentlichen schlagender und quetschender Bearbeitung der Abfälle erfolgt, daß die Matratze mit Fahrzeugen befahren wird, und daß die Abfälle etwa zwei bis drei Monate in der Matratze verbleiben.

2. Verfahren nach Anspruch 1, dadurch gekennzeichnet, daß der Mulchvorgang der jeweils obersten Matratzenlage durch mehrmaliges Überfahren der Matratze mit einem Mulchgerät mit an einer angetriebenen Welle angebrachten Schlaghämmern erfolgt.

3. Verfahren nach Anspruch 1 oder 2, dadurch gekennzeichnet, daß die jeweils oberste Matratzenlage nach einem Mulchvorgang mittels einer Bodenfräse aufgelockert und einem weiteren Mulchvorgang unterworfen wird.

4. Verfahren nach Anspruch 1, dadurch gekennzeichnet, daß die Matratze bis zu einer Höhe von etwa 0,5 bis 1,0 m und aus etwa 5 bis 10 Matratzenlagen aufgeschichtet wird.

5. Verfahren nach Anspruch 1, dadurch gekennzeichnet, daß die Abfälle vorsortiert und in wechselnden Matratzenschichten ausgebreitet werden.

6. Verfahren nach Anspruch 5, dadurch gekennzeichnet, daß bedarfsweise Kompost-Zuschlagstoffe wie Mist, Stickstoff, Bentonit od. dgl. beim Aufschichten der Matratze zugegeben werden.

7. Verfahren nach Anspruch 1, dadurch gekennzeichnet, daß in der Matratze bis zu etwa 25 Volumenprozent Klärschlamm enthalten sind.

**Claims**

1. Method for the composting of organic wastes, especially cemetery and garden wastes, in which the wastes are disintegrated and stacked for rotting in compost heaps, characterised by the fact that the wastes are layered in several layers into a flat mattress on the ground, that the disintegration of the wastes takes place in each individual mattress layer by a mulching process with treatment of the wastes essentially by beating and crushing, that the mattress is driven over by vehicles, and that the wastes remain in the mattress for some two to three months.

2. Method according to Claim 1, characterised by the fact that the mulching process of the top mattress layer in each case takes place by driving across the mattress several times with a mulching device with sledgehammers fitted on a driven shaft.

3. Method according to Claims 1 or 2, characterised by the fact that the top mattress layer in each case is opened up by means of a rotary hoe and subjected to a further mulching process.

4. Method according to Claim 1, characterised by the fact that the mattress is built up in layers to a height of some 0.5 to 1.0 m from some 5 to 10 mattress layers.

5. Method according to Claim 1, characterised by the fact that the wastes are pre-sorted and are spread out in alternating mattress layers.

6. Method according to Claim 5, characterised by the fact that, if required, compost additives such as manure, nitrogen, bentonite or the like are added when building up the layers of the mattress.

7. Method according to Claim 1, characterised by the fact that the mattress contains up to about 25% by volume of sludge.

## Revendications

1. Procédé de compostage de déchets organiques, en particulier de déchets de cimetière et de jardin, dans lequel les déchets sont broyés et sont dressés pour pourrir en tas de compost, caractérisé en ce que, avant d'être dressés en tas de compost, les déchets sont stratifiés en plusieurs couches sur le sol en un matelas plat, en ce que le broyage des déchets est effectué séparément dans chaque couche du matelas par une étape de déchiquetage selon un traitement des déchets qui consiste essentiellement à les battre et à les écraser, en ce que le matelas est parcouru par des véhicules et en ce que les déchets restent dans le matelas environ deux ou trois mois.

2. Procédé suivant la revendication 1, caractérisé en ce que l'étape de déchiquetage de la couche supérieure du matelas est chaque fois exécutée en faisant passer plusieurs fois sur le matelas un déchiqueteur muni de marteaux de battage fixés sur un arbre de transmission.

3. Procédé selon l'une des revendications 1 ou 2, caractérisé en ce que, chaque fois, la couche supérieure du matelas est désagrégée au moyen d'une fraiseuse de labour après une étape de déchiquetage et est soumise à autre étape de déchiquetage.

4. Procédé suivant la revendication 1, caractérisé en ce que le matelas est stratifié jusqu'à une hauteur d'environ 0,5 à 1,0 m et en 5 à 10 couches de matelas.

5. Procédé suivant la revendication 1, caractérisé en ce que les déchets sont préalablement triés et sont étalés en couches de matelas diversifiées.

6. Procédé suivant la revendication 5, caractérisé en ce que, en fonction des besoins, on peut ajouter des adjuvants de compost, tels que du fumier, de l'azote, de la bentonite ou similaire lors de la stratification du matelas.

7. Procédé suivant la revendication 1, caractérisé en ce que jusqu'à 25 % en volume de boue liquide sont contenus dans le matelas.

0 152 524

FIG. 2

FIG. 1

1